# EUROPÄISCHE PATENTSCHRIFT

(11) **EP 3 665 065 B1**
(45) Veröffentlichungstag und Bekanntmachung des Hinweises auf die Patenterteilung: **30.06.2021**
(21) Anmeldenummer: 18755754.1
(22) Anmeldetag: 08.08.2018
(51) Int. Cl.: B62D 1/19, B62D 1/181

(54) **VERSTELLBARE LENKSÄULE FÜR EIN KRAFTFAHRZEUG MIT ENERGIEABSORPTIONSVORRICHTUNG**
ADJUSTABLE STEERING COLUMN FOR A MOTOR VEHICLE, COMPRISING AN ENERGY ABSORPTION DEVICE
COLONNE DE DIRECTION RÉGLABLE POUR UN VÉHICULE AUTOMOBILE AVEC ARRANGEMENT D'ABSORPTION D'ÉNERGIE

(30) Priorität: 10.08.2017 DE 102017213911
(43) Veröffentlichungstag der Anmeldung: 17.06.2020
(73) Patentinhaber: thyssenkrupp Presta AG, 9492 Eschen (LI); thyssenkrupp AG, 45143 Essen (DE)
(72) Erfinder: KIRMSZE, Helmut, 9494 Schaan (LI)
(74) Vertreter: thyssenkrupp Intellectual Property GmbH
(86) Internationale Anmeldenummer: PCT/EP2018/071509
(87) Internationale Veröffentlichungsnummer: WO 2019/030285

(56) Entgegenhaltungen:
- WO-A1-2017/125311
- JP-A- 2012 180 039
- US-A1- 2005 167 962
- US-A1- 2006 033 321
- US-A1- 2008 229 867
- US-A1- 2015 232 117
- US-A1- 2016 046 318
- US-A1- 2016 368 524

## Beschreibung

Die Erfindung betrifft eine verstellbare Lenksäule für ein Kraftfahrzeug nach dem Oberbegriff des Patentanspruchs 1.

Entsprechend betrifft die Erfindung eine verstellbare Lenksäule für ein Kraftfahrzeug, umfassend eine Stelleinheit zur drehbaren Lagerung einer Lenkwelle um eine Längsachse, sowie eine Trageinheit, in der die Stelleinheit in Richtung der Längsachse der Lenkwelle mittels eines an der Trageinheit angeordneten motorischen Längsverstellantriebs axial verschiebbar gelagert ist, und weiters umfassend eine Übertragungseinrichtung, die einerseits mit der Stelleinheit gekoppelt ist und andererseits mit dem Längsverstellantrieb gekoppelt ist, wobei eine Energieabsorptionsvorrichtung vorgesehen ist, die im Fall einer Verschiebung der Stelleinheit gegenüber der Übertragungseinrichtung Energie absorbiert, wobei eine Kopplungseinrichtung mit einem Kopplungselement vorgesehen ist, die mit der Stelleinheit verbunden ist und die mit der Übertragungseinrichtung verbunden ist, wobei in einem Crashfall, bei dem eine Kraft in Richtung der Längsachse auf die Lenkwelle einwirkt, die einen vorherbestimmten Wert überschreitet, die Verbindung der Kopplungseinrichtung mit der Stelleinheit und/oder der Übertragungseinrichtung aufgehoben wird, so dass eine Bewegung zwischen der Stelleinheit und der Übertragungseinrichtung ermöglicht ist, wobei die Kopplungseinrichtung ein stiftförmiges Halteelement aufweist, das in ein Langloch der Kopplungseinrichtung hineinragt, wobei ein Blockierelement vorgesehen ist, das die Bewegung des Halteelements im Langloch blockiert und im Crashfall die Bewegung des Halteelements im Langloch freigibt.

Eine derartige Lenksäule mit Energieabsorptionsvorrichtung ist aus der US 2015/023 2117 A1 bekannt. Bei der bekannten Lenksäule ist ein wirkungsmäßig zwischen dem Längsverstellungsantrieb und der Energieabsorptionsvorrichtung angeordnetes Kopplungselement zusätzlich mittels Nieten an der Stelleinheit befestigt. Die Niete dienen als Bypass für die Verstellkräfte, damit im Normalbetrieb die Verstellkräfte nicht über die Energieabsorptionsvorrichtung auf die Stelleinheit übertragen werden, was die Funktion der Energieabsorptionsvorrichtung beeinträchtigen könnte. Wenn aber im Falle eines Fahrzeugcrashs die Stelleinheit infolge einer hohen Aufprallenergie eine starke Axialkraft in Richtung Fahrzeugfront erfährt, scheren die Nietverbindungen zu dem fixierten Kopplungselement ab, so dass es zu einer Axialverschiebung zwischen der Stelleinheit und dem Kopplungselement kommt, die mithilfe der Energieabsorptionsvorrichtung abgebremst wird. Die bekannte Lenksäule hat den Nachteil, dass die Losbrechkraft zum Abscheren der Nietverbindungen auf die Erfordernisse nicht genau eingestellt werden kann.

Eine Lenksäule der eingangs genannten Art ist aus der WO 2017/125311 A1 oder der US 2016/046318 A1 bekannt. Dabei ist jedoch die Anpassung der Losbrechkraft aufwendig.

Aufgabe der Erfindung ist es, eine Lenksäule anzugeben, die im Falle eines Fahrzeugcrashs mit einer besser definierten Losbrechkraft losbricht.

Die erfindungsgemäße Lösung ergibt sich aus den kennzeichnenden Merkmalen des Anspruchs 1. Vorteilhafte Ausgestaltungsformen sind in den Unteransprüchen beschrieben.

Erfindungsgemäß ist es vorgesehen, dass das Blockierelement aus einem Kunststoffbalken besteht, der sich quer über das Langloch erstreckt und in zwei gegenüberliegend angeordneten seitlichen Ausnehmungen der Langlochwände verankert ist.

Diese Ausführungsform eignet sich besonders gut zur Anpassung der Losbrechkraft an die Erfordernisse, denn der Kunststoffbalken kann einerseits mehr oder weniger stark ausgestaltet werden und andererseits aus verschiedenen Kunststoffen mit unterschiedlichen Brucheigenschaften bestehen.

Die Längsachse der Lenkspindel fällt dabei mit der Drehachse der Lenkspindel zusammen und wird synonym verwendet.

Durch die Ausgestaltung des Blockierelements in Bezug auf die Form, die Anordnung, den Werkstoff und weiteren Designmerkmalen, kann eine jeweils gewünschte Losbrechkraft eingestellt werden, bei deren Überschreiten die Bewegung der Stelleinheit gegenüber der Übertragungseinrichtung ermöglicht ist. In diesem Fall, dem Crashfall, kann die Energieabsorptionsvorrichtung in die Verschiebung eingebrachte Energie aufzehren. Im Fall, dass die Losbrechkraft nicht überschritten wird, also eine Kraft auf die Lenkwelle einwirkt, die unterhalb der jeweils gewünschten Grenze für die Losbrechkraft liegt, ist die Bewegung der Stelleinheit gegenüber der Übertragungseinrichtung blockiert. Dieser Fahrzustand stellt den Normalzustand im Fahrbetrieb des Kraftfahrzeugs dar.

Bevorzugt wird im Crashfall die Verbindung der Kopplungseinrichtung mit der Stelleinheit aufgehoben. Es ist aber denkbar und möglich, die Verbindung der Kopplungseinrichtung mit der Übertragungseinrichtung im Crashfall aufzuheben.

Es kann bevorzugt vorgesehen sein, dass das Langloch der Kopplungseinrichtung in einem der Fahrzeugfront zugewandten vorderen

Endabschnitt eines Kopplungselements angeordnet ist und dabei axial parallel zur Längsachse ausgerichtet ist und bevorzugt nach vorne offenen ausgebildet ist. Das stiftförmige Halteelement ist in dieser Ausführungsform mit der Stelleinheit fest verbunden, steht von dieser in radialer Richtung ab und ragt durch das Langloch hindurch. Im Normalzustand verhindert das Blockierelement das axiale Gleiten des Halteelements in dem Langloch. In der bevorzugten Form mit dem vorne offenen Langloch wird auch insbesondere das Herausgleiten aus dem offenen Ende des Langlochs durch das Blockierelement im Normalzustand verhindert. Im Crashfall wird jedoch die Blockierwirkung des Blockierelements aufgehoben und die Relativbewegung entsprechend ermöglicht.

Die erfindungsgemäße Lösung hat den Vorteil, dass nicht das Halteelement selbst aus seiner Verankerung losgebrochen werden muss. Diese Aufgabe übernimmt bei der Erfindung das Blockierelement. Das Halteelement selbst kann nach Durchbrechung der durch das Blockierelement hervorgerufenen Blockade seinen Weg durch das Langloch ungehindert fortsetzen, in einem bevorzugten Fall sogar bis es aus dem offenen vorderen Endabschnitt des Langlochs herausgleitet. Mit Vorteil kann das Blockierelement in Bezug auf seine Form und sein Material so ausgestaltet werden, dass für die Überwindung der Blockade eine vorher definierte Kraft erforderlich ist.

Eine vorteilhafte Ausgestaltung der Erfindung sieht vor, dass das stiftförmige Halteelement als Niet oder Schraube ausgestaltet ist. Hierbei handelt es sich um einfache und kostengünstige Standardbauteile, die auf bekannte Weise an der Stelleinheit befestigt werden können.

In vorteilhafter Ausgestaltung weist die Stelleinheit eine Bohrung zur Befestigung des Niets oder eine Gewindebohrung zum Einschrauben einer Schraube auf.

Gemäß einer bevorzugten Ausführungsform der Erfindung wird das Blockierelement durch einen in das Langloch hineinragenden Vorsprung des Kopplungselementes gebildet. In diesem Fall ist der Vorsprung bereits Teil des Kopplungselementes und mit diesem fest verbunden. Eine besondere Befestigung des Blockierelements am Kopplungselement ist in dieser Ausführung nicht erforderlich.

Mit Vorteil wird der genannte Vorsprung durch Ausstanzen gemeinsam mit dem Langloch in das Kopplungselement eingebracht. Der Vorsprung begrenzt dann die Bewegung des stiftförmigen Halteelements im Langloch. Es kann dabei vorgesehen sein, den Vorsprung noch weiter zu verformen, so dass er den Niet oder die Schraube bogenförmig umschließt.

Bevorzugt wird der vorgefertigte Kunststoffbalken in eine entsprechende Aussparung im Langloch eingepresst werden. Es ist jedoch auch denkbar und möglich, den Kunststoffbalken in die Ausnehmungen der Langlochwände direkt einzuspritzen. Dabei wird der Kunststoffbalken mittels Spritzguss nicht nur erzeugt, sondern gleichzeitig auch montiert.

In bevorzugter Ausgestaltung der Erfindung wird im Crashfall die Verbindung der Kopplungseinrichtung mit der Stelleinheit aufgehoben und die Energieabsorptionsvorrichtung weist mindestens einen Biegedraht auf, dessen erstes Ende mit der Stelleinheit und dessen zweites Ende mit der Kopplungseinrichtung verbunden ist. Wenn im Falle eines Fahrzeugcrashs die Stelleinheit gegenüber der an der Trageinheit fixierten Kopplungseinrichtung axial verschoben wird, wird der Biegedraht verbogen, wobei er einen Teil der Aufprallenergie absorbiert und die axial Verschiebung der Stelleneinheit abbremst. In weiterer vorteilhafter Ausgestaltung weist die Energieabsorptionsvorrichtung einen zweiten Biegedraht auf, dessen erstes Ende mit der Stelleinheit und dessen zweites Ende über eine mittels eines pyrotechnischen Schalters lösbare Schaltverbindung mit der Kopplungseinrichtung verbunden ist. Ist die Schaltverbindung eingeschaltet, so ist im Falle eines Fahrzeugcrashs die Stelleinheit mit beiden Biegedrähten verbunden, so dass beide Biegedrähte verbogen werden und Aufprallenergie absorbieren. Dies führt zu einer stärkeren Abbremsung der Stelleinheit als in dem ersten Fall, wo nur ein Biegedraht aktiviert war. Sollte eine zentrale Steuereinheit des Fahrzeugs jedoch feststellen, dass aufgrund bestimmter Umstände eine geringere Abbremsung vorteilhafter wäre, betätigt sie den pyrotechnischen Schalter, wobei die Verbindung zwischen dem zweiten Biegedraht und der Kopplungseinrichtung unterbrochen wird. Dies hat zur Folge, dass nur der erste Biegedraht verbogen und die insgesamt absorbierte Energie halbiert wird. Die Folge ist eine geringere Abbremsung der Stelleinheit.

Alernativ ist es möglich, dass im Crashfall die Verbindung der Kopplungseinrichtung mit der Übertragungseinrichtung aufgehoben wird, wobei die Energieabsorptionsvorrichtung mindestens einen Biegedraht aufweist, dessen erstes Ende mit der Übertragungseinrichtung und dessen zweites Ende mit der Kopplungseinrichtung verbunden ist. Wenn im Falle eines Fahrzeugcrashs die Stelleinheit gegenüber der an der Trageinheit fixierten Kopplungseinrichtung axial verschoben wird, wird der Biegedraht verbogen, wobei er einen Teil der Aufprallenergie absorbiert und die Axial-verschiebung der Stelleneinheit abbremst. Es können auch entsprechend zwei Biegedrähte vorgesehen sein, analog zu der oben genannten Ausführungsform.

In einer weiteren vorteilhaften Ausführungsform der Erfindung ist vorgesehen, dass der Längsverstellantrieb einen Spindeltrieb mit einer auf einer Spindel axial verschiebbaren Spindelmutter aufweist und dass ein mit der Spindelmutter verbundenes Übertragungselement zusammen mit dem Kopplungselement als einstückiges, integrales Bauteil ausgebildet ist. Hierdurch werden die Zahl der Bauteile und die damit verbundenen Montagekosten reduziert.

Ausführungsbeispiele der Erfindung werden nachfolgend anhand der Zeichnungen näher erläutert. Die Figuren zeigen im Einzelnen:
- Figur 1:: eine perspektivische Ansicht einer erfindungsgemäßen Lenksäule im einbaufertigen Zustand;
- Figur 2:: eine perspektivische Darstellung einer Stelleinheit der Lenksäule von Figur 1 in Verbindung mit einem Längsverstellantrieb;
- Figur 3:: eine Seitenansicht der Stelleinheit mit Energieabsorptionsvorrichtung;
- Figur 4:: eine Explosionsdarstellung der Stelleinheit mit Längsverstellantrieb;
- Figur 5:: ein vergrößertes Detail aus Figur 4;
- Figur 6:: eine geschnittene Teilansicht der Stelleinheit mit Längsverstellantrieb von oben;
- Figur 7:: ein vergrößertes Detail aus Figur 6 eines mit mittels Niet an der Stelleeinheit befestigten Kopplungselements mit einem Bockierelement in Form eines Kunststoffbalkens im intakten Zustand;
- Figur 8:: eine geschnittene Teilansicht des Kupplungselementes mit Halteelement und Blockierelement von Figur 7, jedoch in einer um 90° gedrehten Blickrichtung;
- Figur 9:: das vergrößerte Detail von Figur 7 nach dem Wegbrechen des Blockierelements im Falle eines Fahrzeugcrashs;
- Figur 10:: wie Figur 8, jedoch nach dem Wegbrechen des Blockierelement;
- Figur 11:: eine vergrößerte Detailansicht ähnlich Figur 7, jedoch in einer anderen Ausführungsform mit einem Halteelement in Form einer Schraube, die in einer Gewindebohrung der Stelleinheit eingeschraubt ist;
- Figur 12:: eine vergrößerte Detailansicht ähnlich Fig. 7 und 11, jedoch in einer nicht beanspruchten Ausführungsform, bei der das Halteelement als ein in der Stelleinheit verankerter Einpresszapfen und das Blockierelement als ein umgebogener Abschnitt des Kopplungselementes ausgebildet ist.
- Figur 13:: eine perspektivische vergrößerte Detailansicht einer nicht beanspruchten Ausführungsform,
- Figur 14:: eine vergrößerte Teilansicht der dritten Ausführungsform von der Seite im normalen Betriebszustand;
- Figur 15:: wie Figur 14, jedoch im losgebrochenen Zustand infolge eines Fahrzeugcrashs - im Crashzustand;
- Figur 16:: eine perspektivische vergrößerte Detailansicht einer vierten Ausführungsform, bei der das Halteelement als ein in der Stelleinheit verankerter Niet und das Blockierelement als ein umgebogener Abschnitt des Kopplungselementes ausgebildet ist;
- Figur 17:: eine perspektivische vergrößerte Detailansicht einer vierten Ausführungsform, bei der das Halteelement als eine in der Stelleinheit verankerte Schraube und das Blockierelement als ein umgebogener Abschnitt des Kopplungselementes ausgebildet ist.

Eine elektrisch verstellbare Lenksäule für ein Kraftfahrzeug umfasst eine Lenkwelle 2, die um eine Längsachse 7 drehbar in einer Stelleinheit 3 gelagert ist. Die Stelleinheit 3 ist ihrerseits entlang der Längsachse 7 verschiebbar in einer Trageinheit 4 gelagert. Die Trageinheit 4 ist im Beispiel wiederum in einem mit dem nicht gezeigten Fahrzeugchassis fest verbundenen Halter 5 schwenkbar gelagert, wodurch eine Höhenverstellung der Lenkwelle 2 ermöglicht wird. Die Erfindung ist dabei jedoch auch anwendbar auf Lenksäulen, die in ihrer Höhe nicht verstellbar sind.

Für die Höhenverstellung ist ein elektrischer Höhenverstellantrieb 6 vorgesehen, der hier nicht weiter erläutert wird.

Ein elektrischer Längsverstellungsantrieb 8 ist an der Trageinheit 4 angeordnet. Der Längsverstellungsantrieb 8 weist einen Elektromotor 9 und ein Getriebe 10 auf, welches mit einer Spindel 11 verbunden ist. Der Elektromotor 9 treibt über das Getriebe 10 die Spindel 11 an. Die Spindel 11 ist entlang der Längsachse 7 ausgerichtet. Auf der Spindel 11 sitzt eine Spindelmutter 12, die durch Drehen der Spindel 11 mittels des Elektromotors 9 entlang der Längsachse 7 hin- und her verschoben werden kann. Die Spindelmutter 12 ist mit der Übertragungseinrichtung in Form eines Übertragungselements 13 verbunden, welches mittels zweier Befestigungsschrauben 14, 15 mit einem in Richtung der Längsachse 7 ausgerichteten Kopplungselement 16, der Kpplungseinrichtung in Bohrungen 161 beziehungsweise 162 verschraubt sind. Am Kopplungselement 16 ist ein Einsteckteil 17 befestigt, welches zwei in radialer Richtung quer zur Längsachse 7 ausgerichtete Fixierelemnte 18, 19 aufweist, die zwischen sich ein um etwa 270° umgebogenes rundes Ende 21 eines ersten Biegedrahtes 20 aufnehmen.

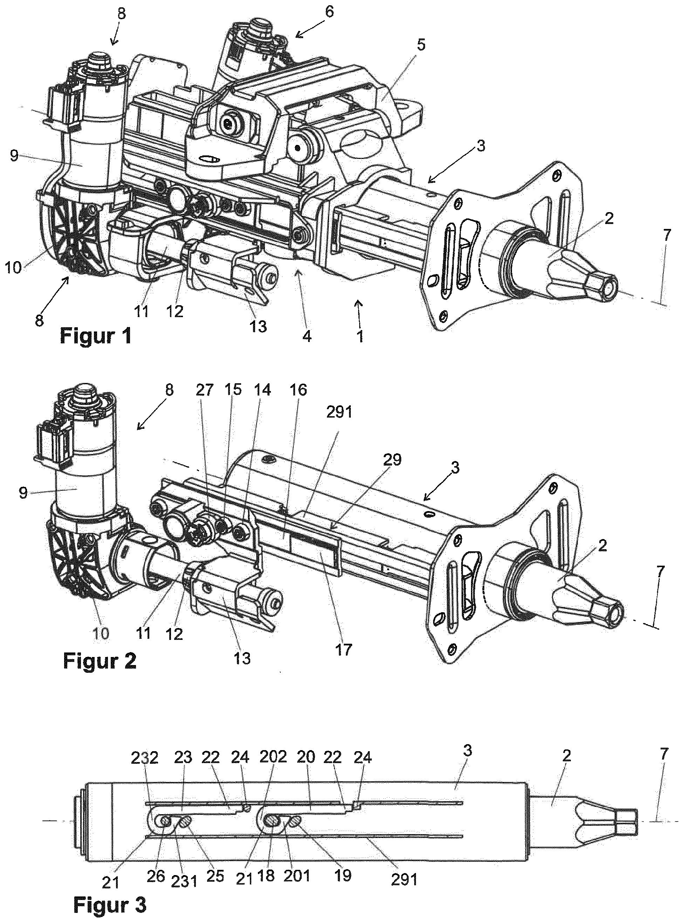

Wie man am besten in Figur 3 erkennt, ist die Stelleinheit 3 mit zwei Biegedrähten 20, 23 ausgestattet, die jeweils ein erstes, gerades Ende 22 und ein zweites, rundes Ende 21 aufweisen. Die geraden Enden 22 liegen jeweils an einem Anschlag 24 der Stelleinheit 3 an. Die Anschläge 24 stellen sicher, dass bei einer Verschiebung der Stelleinheit 3 infolge eines Fahrzeugcrashs die jeweiligen geraden Enden 22 der Biegedrähte 20, 23 zusammen mit der Stelleinheit 3 bewegt werden. Dabei bleibt der Befestigungsabschnitt 201 des runden Endes 21 des ersten Biegedrahts 20 zwischen den beiden Fixierelementen 18, 19 an der Kopplungseinrichtung und damit am Kopplungselement 16 und damit gegenüber der Trageinheit 4 unverrückbar fixiert, so dass der erste Biegedraht 20 im jeweiligen Biegeabschnitt 202 verbogen wird und dabei Aufprallenergie absorbiert.

Der Befestigungsabschnitt 231 des runden Endes 21 des zweiten Biegedrahtes 23 ist in der Darstellung von Figur 3 ebenfalls zwischen zwei Fixierelementen 25, 26 eingeklemmt, wobei jedoch nur das eine Fixerelement 25 fest eingebaut ist. Das andere Fixierelement 26 ist als bewegliches Fixerelement ausgestaltet. Es hat die Form eines Stiftes, der aus einem pyrotechnischen Schalter 27 herausragt. Der pyrotechnische Schaltet 27 ist auf dem Übertragungselement 13 montiert und mittels einer Befestigungsschraube 28 befestigt.

Im Falle eines Fahrzeugcrashs gibt es nun zwei Möglichkeiten:
Ist das bewegliche Fixierelement 26 in der Figur gezeigten Position, so ist der Befestigungsabschnitt 231 des zweiten Biegedrahts 23 zwischen den Fixierelementen 25, 26 eingeklemmt und fixiert. Dies bedeutet, dass die im Falle eines Fahrzeugcrashs entlang der Längsachse 7 nach links verschobene Stelleinheit 3 beide Biegedrähte 20, 23 verbiegt, wobei von der Aufprallenergie einen größerer Teil, der zur Verbiegung von zwei Biegedrähten 20, 23 erforderlich ist, absorbiert wird.

Wenn im anderen Fall eine nicht gezeigte zentrale Steuerungselektronik aufgrund von ausgewerteten Sensoreingaben entscheidet, dass weniger Aufprallenergie zu absorbieren ist, betätigt sie den pyrotechnischen Schalter 27, der daraufhin in Sekundenbruchteilen das bewegliche Fixierelement 26 außer Eingriff mit dem zweiten Biegedraht 23 bringt. Bei einer Verschiebung der Stelleinheit 3 nach links wird der zweite Biegedraht 23 lediglich mit verschoben, ohne sich jedoch zu verbiegen. Aufprallenergie wird allein im ersten Biegedraht 20 absorbiert, wodurch der Betrag an absorbierter Energie geringer ausfällt als im ersten Fall.

Auch wenn im gezeigten Ausführungsbeispiel das Übertragungselement 13 und das Kupplungselement 16 als zwei separate, mittels der Befestigungsschrauben 14, 15 miteinander verschraubte Bauteile dargestellt sind, kann es im Hinblick auf eine weniger aufwändige Montage vorteilhaft sein, das Übertragungselement 13 und das Kopplungselement 16 als einstückiges integrales Bauteil auszubilden.

Die Biegedrähte 20, 23 bilden mit ihren Anschlägen 24 an der Stelleinheit 3 und der Führungsschiene 291 und ihren Fixierelementen 18, 19, 25, 26 sowie dem pyrotechnischen Schalter 27 eine schaltbare Energieabsorptionsvorrichtung 29, die je nach Anforderung der jeweiligen Crashsituation zwei verschiedene Teilbeträge der Aufprallenergie absorbieren kann.

Um zu vermeiden, dass die für die Längsverstellung durch den Längsverstellantrieb 8 von der Tageinheit 4 auf die Stelleinheit 3 übertragenden Verstellkräfte nicht über die Energieabsorptionsvorrichtung 29 übertragen werden und zur Vermeidung einer dadurch bedingten Beeinträchtigung der Funktion der Energieabsorptionsvorrichtung 29 ist ein Aufbrechen der Verbindung zwischen der Kopplungseinrichtung mit der Stelleinheit und/oder ein Aufbrechen der Verbindung zwischen der Kopplungseinrichtung mit der Übertragungseinrichtung vorgesehen, der in verschiedenen Ausführungsformen realisiert werden kann.

Infolge des selbsthemmenden Spindeltriebs 11, 12 kann das mit dem Kopplungselement 16 fest verbundene Übertragungselement 13 mit der Spindelmutter 12 bei Stillstand des Elektromotors 9 und der Spindel 11 nicht mehr in Richtung der Längsachse 7 auf der Spindel 11 verschoben werden. Mithilfe der Kopplungseinrichtung ist im Normalbetrieb auch die Stelleinheit 3 über das Kopplungselement fest mit der Übertragungseinrichtung und damit über den weiteren Kraftfluss mit der Trageinheit verbunden und kann daher ebenso wenig in Richtung der Längsachse 7 verschoben werden. Im Falle, dass eine Kraft auf die Lenkspindel 2 einwirkt, die einen vordefinierten Betrag überschreitet, also im Crashfall, wird jedoch die Verbindung aufgebrochen wird, so dass sich die Stelleinheit 3 relativ zum Kopplungselement 16 in Richtung der Längsachse 7 verschiebt, wobei ein Teil der Aufprallenergie durch die Energieabsorptionsvorrichtung 29 absorbiert wird. Im Beispiel wird dazu die Verbindung zwischen dem Kopplungselement 16 und dem Übertragungselement 13 aufgetrennt.

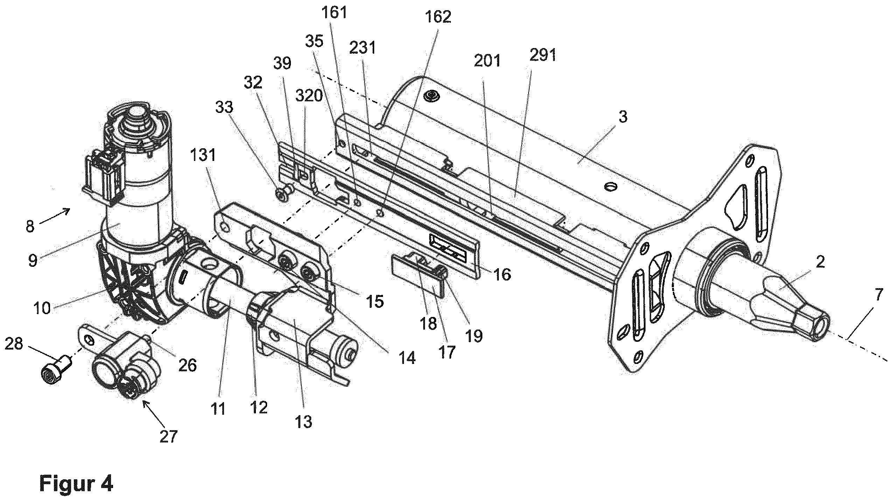

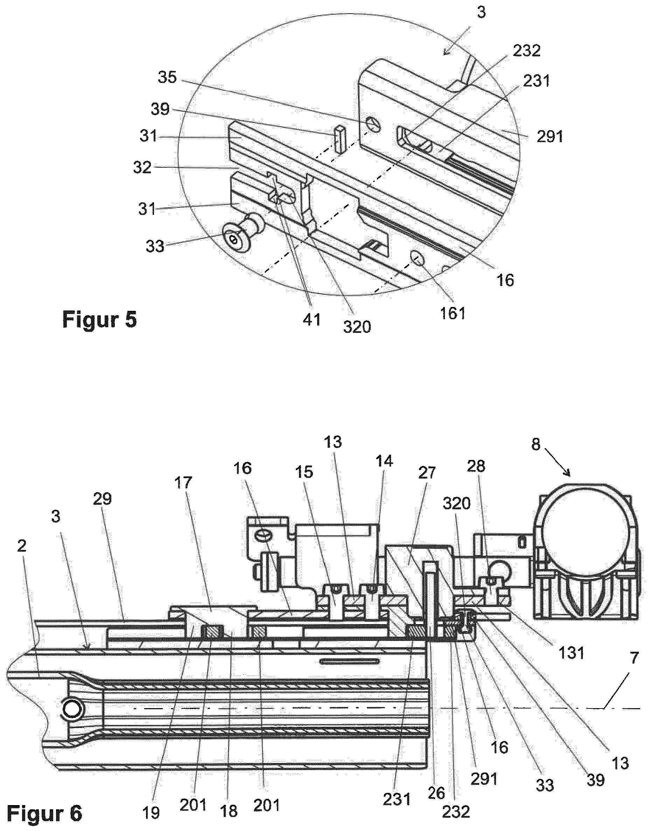

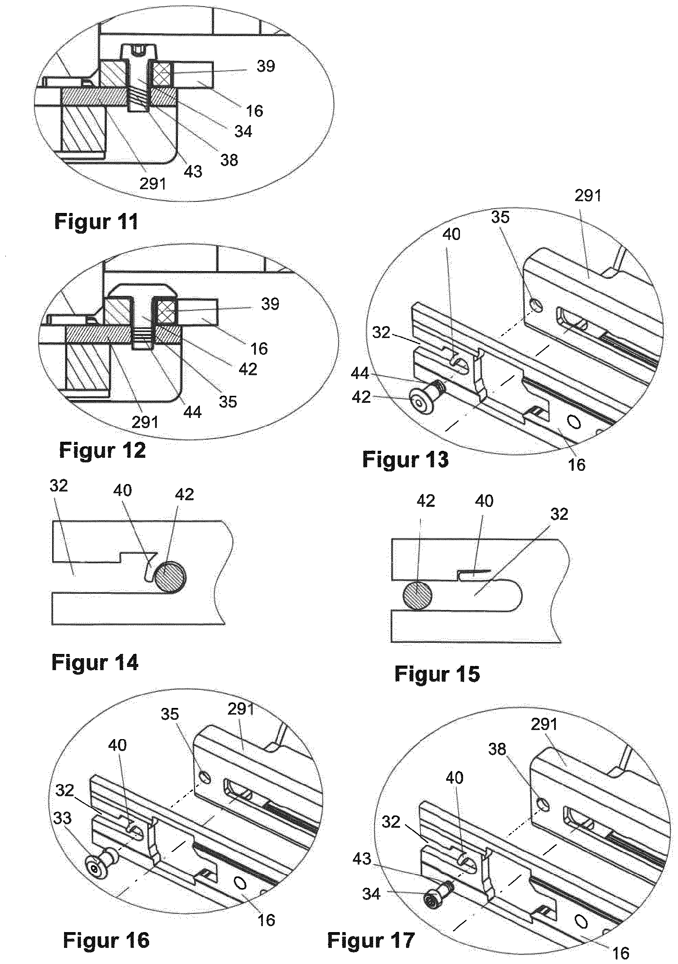

Im Beispiel ist zur Realisierung einer derartigen Funktion ist das Kopplungselement 16 an seinem der Fahrzeugfront zugewandten Endabschnitt mit einem axial ausgerichteten, nach vorn offenen Langloch 32 versehen, durch das ein stiftförmiges Halteelement 33, 34 quer hindurchragt. Das Halteelement kann als Niet 33 oder als Schraube 34 oder als Pressstift 42 ausgestaltet sein. Es ist entsprechend den Figuren 1 bis 10 mit der Stelleinheit 3 fest verbunden, indem der Niet 33 durch eine Bohrung 35 in einer Schiene 291, die fest mit der Stelleinheit 3 verbunden ist, hindurchragt und am Ausgang der Bohrung 35 mittels eines verdickten Endes 36 verankert ist. An seinem anderen Ende ist der Niet 33 mit einem Nietkopf 37 versehen, der an der gegenüberliegenden Seite des Kopplungselements 16 anliegt und das Langloch 32 seitlich teilweise überragt. Bei einer alternativen Ausführungsform, wie sie in Figur 11 veranschaulicht ist, ist eine Schraube 34 mit einem Gewinde 43 in eine Gewindebohrung 38 der Schiene 291 eingeschraubt. In einer weiteren alternativen bevorzugten Ausführungsform ist ein Pressstift 42 mit einem Rändel 44 in eine Bohrung 35 in der Schiene 291 eingepresst, wie dies in Figur 12 veranschaulicht ist.

Um eine Bewegung des Halteelements 33, 34, 42 in dem Langloch 32, insbesondere ein Herausrutschen des jeweiligen Halteelements 33, 34, 42 aus dem Langloch 32 zu verhindern, ist ein Blockierelement 39, 40 vorgesehen, das nach Überschreiten der jeweils vordefinierten Kraft die Bewegung freigibt.

In einer ersten Ausführungsform, wie sie in den Figuren 1 bis 12 veranschaulicht ist ist das Blockierelement als Kunststoffbalken 39 ausgebildet, der in zwei seitlichen Ausnehmungen 41 des Langlochs 32 verankert ist und sich quer über das Langloch 32 erstreckt. Vorzugsweise wird das plastische Kunststoffmaterial des Kunststoffbalkens 39 bei der Fertigung in die Ausnehmungen 41 der Wände des Langlochs 32 eingepresst.

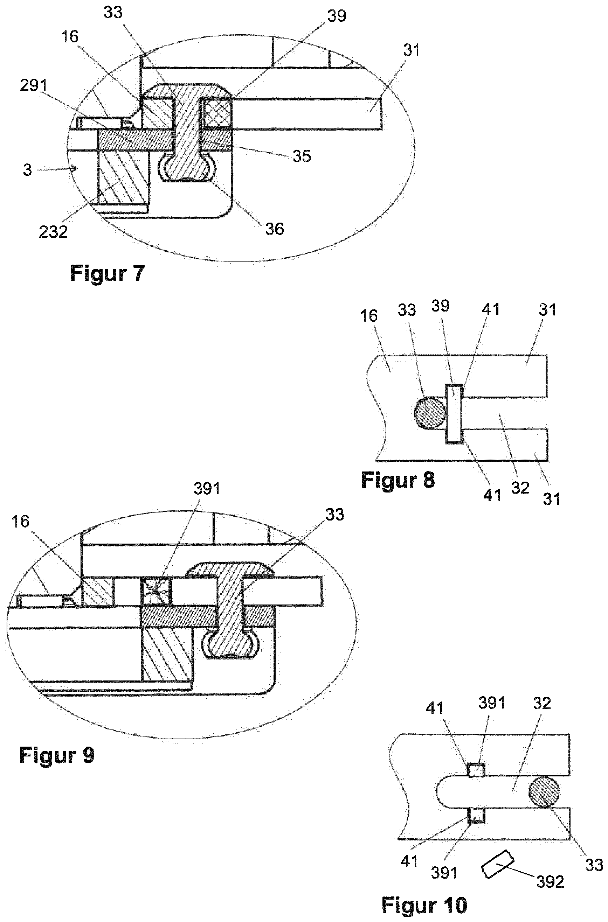

Die Figuren 7 und 8 zeigen anhand zweier orthogonal aufeinander stehender Schnittebenen das System im Normalzustand, bei dem die durch den in Richtung der Längsachse 7 auftretende Verstellkräfte vom Längsverstellantrieb 8 über das Kopplungselement 16 sowie das als Niet 33 ausgestaltete Haltelement auf die Schiene 291 und somit auf die Stelleinheit 3 übertragen werden. Eine entsprechende Situation ist in Figur 11 dargestellt mit dem Unterschied, dass hier das Kopplungselement als Schraube 34 ausgebildet ist. In Figur 12 ist eine entsprechende Situation dargestellt, bei dem das Kopplungselement als Pressstift 42 dargestellt ist, der in die Bohrung 35 eingepresst ist. In den genannten Fällen verhinderten das als Kunststoffbalken 39 ausgebildete Blockierelement eine relative Verschiebung zwischen Kopplungselement 16 und Stelleinheit 3.

In den Figuren 9 und 10 ist die Situation nach einem Fahrzeugcrash dargestellt. Die Stelleinheit 3 hat sich entlang der Längsachse 7 nach rechts verschoben und dabei das als Niet 33 ausgestaltete Halteelement mitgenommen. Der Niet 33 hat dabei den Kunststoffbalken 39 zerbrochen, wobei Stücke 391 des Kunststoffbalkens 39 in der Verankerung 41 verblieben sind und ein weiteres Stück 392 des Kunststoffbalkens aus der Lenksäule herausfällt, und sich dem offenen Ende des Langlochs 32 genähert, welches er anschließend ganz verlassen wird. Der Kunststoffbalken 39 ist dabei bezüglich seiner Materialstärke und der Eigenschaften des Kunststoffmaterials derart konstruiert, dass er bei einer vorgegebenen Axialkraft zerbricht und das Halteelement 33, 34 freigibt. Es ist auch denkbar, Sollbruchstellen in den Kunststoffbalken einzubringen, die gezielt die Bruchsituation beeinflussen.

Eine andere nicht beanspruchte Ausführungsform ist in den Figuren 13 bis 15 dargestellt. Hier besteht das Halteelement aus einem Presstift 42. Das Blockierelement 40 ist allerdings als Vorsprung 40 ausgebildet, der in den Innenraum des Langlochs 32 hineinragt und so ein axiales Herausschieben des Presstiftes 42 verhindert. Der Vorsprung 40 kann auf einfache Weise durch eine Ausstanzung im Kopplungselement 16 - bevorzugt gemeinsam mit dem Langloch 32, erzeugt werden. Die in Figur 14 dargestellte Situation zeigt den Normalzustand. Die in Figur 15 dargestellte Situation zeigt den Zustand nach einem Fahrzeugcrash, wenn die hohen Aufprallkräfte die Stelleinheit 3 und mit ihr den Pressstift 42 in Richtung der Längsachse 7 nach links verschieben. Dabei sind die Kräfte so groß, dass der Vorsprung 14 in Richtung der Wand des Langlochs 32 gebogen wird. Dabei bestimmt die Stärke und das Material des Vorsprungs 40 die zum Losbrechen der Verbindung erforderliche Axialkraft.

In der Figur 16 ist die Anordnung, wie sie in Figur 13 dargestellt ist veranschaulicht, allerdings ist das Halteelement durch einen Niet 33 dargestellt.

In der Figur 17 ist die Anordnung, wie sie in Figur 13 dargestellt ist veranschaulicht, allerdings ist das Halteelement durch eine Schraube 34, die mit dem Gewinde 42 in das Gewindebohrung 38 eingeschraubt wird, dargestellt.

Mit der Erfindung wurde eine längsverstellbare Lenksäule mit Energieabsorptionsvorrichtung geschaffen, die einfach aufgebaut ist und bei der die im Crashfall erforderliche Losbrechkraft zur Aktivierung der Energieabsorptionsvorrichtung konstruktionsmäßig gut einstellbar ist.

## Patentansprüche

1. Verstellbare Lenksäule (1) für ein Kraftfahrzeug, umfassend eine Stelleinheit (3) zur drehbaren Lagerung einer Lenkwelle (2) um eine Längsachse (7), sowie eine Trageinheit (4), in der die Stelleinheit (3) in Richtung der Längsachse (7) der Lenkwelle (2) mittels eines an der Trageinheit (4) angeordneten motorischen Längsverstellantriebs (8) axial verschiebbar gelagert ist, und weiters umfassend eine Übertragungseinrichtung, die einerseits mit der Stelleinheit (3) gekoppelt ist und andererseits mit dem Längsverstellantrieb (8) gekoppelt ist, wobei eine Energieabsorptionsvorrichtung (29) vorgesehen ist, die im Fall einer Verschiebung der Stelleinheit (3) gegenüber der Übertragungseinrichtung Energie absorbiert, wobei eine Kopplungseinrichtung mit einem Kopplungselement (16) vorgesehen ist, die mit der Stelleinheit (3) verbunden ist und die mit der Übertragungseinrichtung verbunden ist, wobei in einem Crashfall, bei dem eine Kraft in Richtung der Längsachse (7) auf die Lenkwelle (2) einwirkt, die einen vorherbestimmten Wert überschreitet, die Verbindung der Kopplungseinrichtung mit der Stelleinheit (3) und/oder der Übertragungseinrichtung aufgehoben wird, so dass eine Bewegung zwischen der Stelleinheit (3) und der Übertragungseinrichtung ermöglicht ist, wobei die Kopplungseinrichtung ein stiftförmiges Halteelement (33, 34, 42) aufweist, das in ein Langloch (32) der Kopplungseinrichtung hineinragt, wobei ein Blockierelement (38, 40) vorgesehen ist, das die Bewegung des Halteelements (33, 34) im Langloch (32) blockiert und im Crashfall die Bewegung des Halteelements (33, 34) im Langloch (32) freigibt, **dadurch gekennzeichnet, dass** das Blockierelement aus einem Kunststoffbalken (39) besteht, der sich quer über das Langloch (32) erstreckt und in zwei gegenüberliegend angeordneten seitlichen Ausnehmungen (41) der Langlochwände verankert ist.

2. Lenksäule nach Anspruch 1, **dadurch gekennzeichnet, dass** das stiftförmiges Halteelement als Niet (33) oder Schraube (34) ausgestaltet ist.

3. Lenksäule nach Anspruch 2, **dadurch gekennzeichnet, dass** die Stelleinheit (3) eine Bohrung (35) zur Befestigung des Niets (33) oder eine Gewindebohrung (38) zum Einschrauben der Schraube (34) aufweist.

4. Lenksäule nach einem der vorhergehenden Ansprüche, **dadurch gekennzeichnet, dass** das Blockierelement durch einen in das Langeloch (32) hineinragenden Vorsprung (40) des Kopplungselement (16) gebildet wird.

5. Lenksäule nach Anspruch 4, **dadurch gekennzeichnet, dass** der Vorsprung (40) durch Ausstanzen und Umbiegen eines das Langloch (32) begrenzenden Abschnitts des Kopplungselements (16) erzeugt ist.

6. Lenksäule nach Anspruch 1, **dadurch gekennzeichnet, dass** der Kunststoffbalken (39) in die Ausnehmungen (41) der Langlochwände eingepresst ist.

7. Lenksäule nach einem der vorhergehenden Ansprüche, **dadurch gekennzeichnet, dass** im Crashfall die Verbindung der Kopplungseinrichtung mit der Stelleinheit aufgehoben wird und die Energieabsorptionsvorrichtung (29) mindestens einen Biegedraht (20) aufweist, dessen erstes Ende (22) mit der Stelleinheit (3) und dessen zweites Ende (21) mit der Kopplungseinrichtung verbunden ist.

8. Lenksäule nach Anspruch 7, **dadurch gekennzeichnet, dass** die Energieabsorptionsvorrichtung (29) einen zweiten Biegedraht (23) aufweist, dessen erstes Ende (22) mit der Stelleinheit (3) und dessen zweites Ende (21) über eine mittels eines pyrotechnischen Schalters (27) lösbare Schaltverbindung (26) mit der Kopplungseinrichtung verbunden ist.

9. Lenksäule nach einem der vorhergehenden Ansprüche, **dadurch gekennzeichnet, dass** der Längsverstellantrieb (8) einen Spindeltrieb mit einer auf einer Spindel (11) axial verschiebbaren Spindelmutter (12) aufweist und dass ein mit der Spindelmutter (12) verbundenes Übertragungselement (13) als Übertragungseinrichtung ausgebildet ist und zusammen mit dem Kopplungselement (16) als einstückiges integrales Bauteil ausgebildet ist.

## Claims

1. Adjustable steering column (1) for a motor vehicle, comprising an actuating unit (3) for the rotatable mounting of a steering shaft (2) about a longitudinal axis (7), and a supporting unit (4), in which the actuating unit (3) is mounted such that it can be displaced axially in the direction of the longitudinal axis (7) of the steering shaft (2) by means of a motorized longitudinal adjustment drive (8) which is arranged on the supporting unit (4), and comprising, furthermore, a transmission device which is coupled firstly to the actuating unit (3) and is coupled secondly to the longitudinal adjustment drive (8), an energy absorption apparatus (29) being provided which absorbs energy in the case of a displacement of the actuating unit (3) with respect to the transmission device, a coupling device with a coupling element (16) being provided, which coupling device is connected to the actuating unit (3) and is connected to the transmission device, the connection of the coupling device to the actuating unit (3) and/or the transmission unit being cancelled in the case of a crash, in the case of which a force acts on the steering shaft (2) in the direction of the longitudinal axis (7), which force exceeds a predefined value, with the result that a movement between the actuating unit (3) and the transmission device is made possible, the coupling device having a pin-shaped holding element (33, 34, 42) which protrudes into a slot (32) of the coupling device, a blocking element (38, 40) being provided which blocks the movement of the holding element (33, 34) in the slot (32) and, in the case of a crash, releases the movement of the holding element (33, 34) in the slot (32), **characterized in that** the blocking element consists of a plastic bar (39) which extends transversely over the slot (32) and is anchored into lateral recesses (41) of the slot walls, which lateral recesses (41) are arranged so as to lie opposite one another.

2. Steering column according to Claim 1, **characterized in that** the pin-shaped holding element is configured as a rivet (33) or a screw (34).

3. Steering column according to Claim 2, **characterized in that** the actuating unit (3) has a bore (35) for fastening the rivet (33) or a threaded bore (38) for screwing in the screw (34).

4. Steering column according to one of the preceding claims, **characterized in that** the blocking element is formed by way of a projection (40) of the coupling element (16), which projection (40) protrudes into the slot (32).

5. Steering column according to Claim 4, **characterized in that** the projection (40) is produced by way of punching out or bending over of a section of the coupling element (16), which section adjoins the slot (32).

6. Steering column according to Claim 1, **characterized in that** the plastic bar (39) is pressed into the recesses (41) of the slot walls.

7. Steering column according to one of the preceding claims, **characterized in that**, in the case of a crash, the connection of the coupling element to the actuating element is cancelled, and the energy absorption apparatus (29) has at least one bending wire (20), the first end (22) of which is connected to the actuating unit (3) and the second end (21) of which is connected to the coupling device.

8. Steering column according to Claim 7, **characterized in that** the energy absorption apparatus (29) has a second bending wire (23), the first end (22) of which is connected to the actuating unit (3) and the second end (21) of which is connected to the coupling device via a switching connection (26) which can be released by means of a pyrotechnical switch (27).

9. Steering column according to one of the preceding claims, **characterized in that** the longitudinal adjustment drive (8) has a spindle drive with a spindle nut (12) which can be displaced axially on a spindle (11), and **in that** a transmission element (13) which is connected to the spindle nut (12) is configured as a transmission device and, together with the coupling element (16), is configured as a single-piece integral component.

## Revendications

1. Colonne de direction réglable (1) pour un véhicule automobile, comportant une unité de réglage (3) servant au montage à rotation d'un arbre de direction (2) autour d'un axe longitudinal (7), ainsi qu'une unité de support (4) dans laquelle l'unité de réglage (3) est montée de manière déplaçable axialement dans la direction de l'axe longitudinal (7) de l'arbre de direction (2) au moyen d'un entraînement de réglage longitudinal (8) motorisé disposé sur l'unité de support (4), et comportant en outre un dispositif de transmission qui est accouplé d'une part à l'unité de réglage (3) et d'autre part à l'entraînement de réglage longitudinal (8), un dispositif d'absorption d'énergie (29) étant prévu, lequel absorbe de l'énergie dans le cas d'un déplacement de l'unité de réglage (3) par rapport au dispositif de transmission, un dispositif d'accouplement doté d'un élément d'accouplement (16) étant prévu, lequel dispositif d'accouplement est relié à l'unité de réglage (3) et lequel est relié au dispositif de transmission, la liaison du dispositif d'accouplement à l'unité de réglage (3) et/ou au dispositif de transmission étant supprimée dans le cas d'une collision lors de laquelle une force agit sur l'arbre de direction (2) dans la direction de l'axe longitudinal (7), laquelle force dépasse une valeur prédéterminée, de sorte qu'un mouvement entre l'unité de réglage (3) et le dispositif de transmission soit rendu possible, le dispositif d'accouplement comprenant un élément de retenue (33, 34, 42) en forme de goupille, lequel pénètre dans un trou oblong (32) du dispositif d'accouplement, un élément de blocage (38, 40) étant prévu, lequel bloque le mouvement de l'élément de retenue (33, 34) dans le trou oblong (32) et, dans le cas d'une collision, autorise le mouvement de l'élément de retenue (33, 34) dans le trou oblong (32), **caractérisée en ce que** l'élément de blocage est constitué d'une barre en matière synthétique (39) qui s'étend transversalement sur le trou oblong (32) et est ancrée dans deux évidements latéraux (41), disposés en regard l'un de l'autre, des parois de trou oblong.

2. Colonne de direction selon la revendication 1, **caractérisée en ce que** l'élément de retenue en forme de goupille est configuré comme un rivet (33) ou une vis (34) .

3. Colonne de direction selon la revendication 2, **caractérisée en ce que** l'unité de réglage (3) comprend un évidement (35) pour la fixation du rivet (33) ou un alésage fileté (38) pour le vissage de la vis (34).

4. Colonne de direction selon l'une des revendications précédentes, **caractérisée en ce que** l'élément de blocage est formé par une saillie (40) de l'élément d'accouplement (16), laquelle pénètre dans le trou oblong (32) .

5. Colonne de direction selon la revendication 4, **caractérisée en ce que** la saillie (40) est produite par découpage et pliage d'une partie de l'élément d'accouplement (16) délimitant le trou oblong (32).

6. Colonne de direction selon la revendication 1, **caractérisée en ce que** la poutre en matière synthétique (39) est enfoncée dans les évidements (41) des parois de trou oblong.

7. Colonne de direction selon l'une des revendications précédentes, **caractérisée en ce qu'**en cas de collision, la liaison du dispositif d'accouplement à l'unité de réglage est supprimée et le dispositif d'absorption d'énergie (29) comprend au moins un fil de flexion (20) dont la première extrémité (22) est reliée à l'unité de réglage (3) et dont la deuxième extrémité (21) est reliée au dispositif d'accouplement.

8. Colonne de direction selon la revendication 7, **caractérisée en ce que** le dispositif d'absorption d'énergie (29) comprend un deuxième fil de flexion (23) dont la première extrémité (22) est reliée à l'unité de réglage (3) et dont la deuxième extrémité (21) est reliée au dispositif d'accouplement par le biais d'une liaison de commutation (26) libérable au moyen d'un commutateur pyrotechnique (27).

9. Colonne de direction selon l'une des revendications précédentes, **caractérisée en ce que** l'entraînement de réglage longitudinal (8) comprend un entraînement à broche doté d'un écrou de broche (12) déplaçable axialement sur une broche (11), et **en ce qu'**un élément de transmission (13) relié à l'écrou de broche (12) est réalisé comme dispositif de transmission et est réalisé comme composant intégré d'une seule pièce conjointement avec l'élément d'accouplement (16).
